# EUROPÄISCHE PATENTSCHRIFT

(11) **EP 2 467 600 B1**
(45) Veröffentlichungstag und Bekanntmachung des Hinweises auf die Patenterteilung: **07.09.2016**
(21) Anmeldenummer: 10732367.7
(22) Anmeldetag: 14.07.2010
(51) Int. Cl.: F03D 15/10

(54) **WINDKRAFTANLAGE UND VERFAHREN ZUR BETRIEBSSTEUERUNG EINER WINDKRAFTANLAGE**
WIND POWER PLANT AND METHOD FOR CONTROLLING THE OPERATION OF A WIND POWER PLANT
ÉOLIENNE ET PROCÉDÉ DE COMMANDE DU FONCTIONNEMENT D'UNE ÉOLIENNE

(30) Priorität: 18.08.2009 DE 102009028612
(43) Veröffentlichungstag der Anmeldung: 27.06.2012
(73) Patentinhaber: ZF Friedrichshafen AG, 88046 Friedrichshafen (DE)
(72) Erfinder: SORG, Johannes, 88213 Ravensburg (DE)
(86) Internationale Anmeldenummer: PCT/EP2010/060108
(87) Internationale Veröffentlichungsnummer: WO 2011/020653

(56) Entgegenhaltungen:
- EP-A2- 1 895 157
- EP-A2- 1 959 131
- WO-A1-2006/010190
- WO-A2-2009/016508
- WO-A2-2010/135754
- DE-U1- 20 212 459
- US-A- 4 443 155

## Beschreibung

Die Erfindung betrifft eine Windkraftanlage, mit einem drehzahlvariabel betreibbaren Windrotor, einem drehzahlkonstant betreibbaren Generator, und einer drehzahlvariabel betreibbaren Elektromaschine, die über ein Überlagerungsgetriebe miteinander in Triebverbindung stehen, wobei die Elektromaschine als Kraftstelleinrichtung zur Drehzahlregelung des Generators sowohl als Generator als auch als Motor betreibbar ist und über einen Frequenzumrichter mit einem Stromnetz in Verbindung steht. Die Erfindung betrifft des Weiteren ein Verfahren zur Betriebssteuerung einer derartigen Windkraftanlage.

Eine Windkraftanlage hat bekanntermaßen die Funktion, die kinetische Energie des Windes in elektrische Energie umzuwandeln. Der auf diese Art regenerativ gewonnene elektrische Strom kann zur Versorgung elektrischer Verbraucher in ein lokales oder in ein überregionales Stromnetz eingespeist werden.

Bei leistungsstärkeren Windkraftanlagen hat sich eine Bauweise durchgesetzt, bei der ein vorzugsweise drei Rotorblätter aufweisender Windrotor um eine horizontalen Drehachse drehbar luvseitig an einer Gondel angeordnet ist. Die Gondel ist über ein Azimutlager um eine vertikale Achse drehbar auf einem Turm gelagert, der über ein Fundament standsicher im Erdboden befestigt ist. Innerhalb der Gondel sind zumeist eine Hochtriebstufe und mindestens ein Generator zur Erzeugung elektrischer Energie untergebracht. Durch die Hochtriebstufe, deren Eingangswelle mit der Rotornabe des Windrotors verbunden ist, wird die relativ niedrige Drehzahl des Windrotors unter entsprechender Wandlung des übertragenen Drehmomentes an der mit dem Rotor des Generators mittelbar oder unmittelbar in Triebverbindung stehenden Ausgangswelle in eine für den Generator günstige höhere Drehzahl übersetzt.

Ältere Windkraftanlagen sind zum Teil drehzahlfest ausgebildet, d.h. bei diesen Windkraftanlagen wird die Drehzahl des Windrotors und damit auch die Rotordrehzahl des Generators durch eine Verstellung des Anstellwinkels der Rotorblätter (Pitch-Regelung) und/oder durch eine Drehung des Rotors im Azimutlager aus bzw. in den Wind (Stall-Regelung) konstant gehalten. Hierdurch kann der durch den vorzugsweise als Synchronläufer ausgebildeten Generator erzeugte Strom bei entsprechender Auslegung des Getriebes und des Generators zwar ohne großen leistungselektronischen Aufwand, insbesondere ohne einen aufwendigen Frequenzumrichter, in das Stromnetz eingespeist werden. Nachteilig an drehzahlfesten Windkraftanlagen ist jedoch der relativ kleine Windgeschwindigkeitsbereich, in dem diese betrieben werden können.

Zur Erweiterung des nutzbaren Windgeschwindigkeitsbereiches und somit zur Erhöhung der Energieausbeute sind daher Windkraftanlagen entwickelt worden, bei denen eine variable Drehzahl sowohl des Windrotors als auch des Generators vorgesehen ist. Ein drehzahlvariabler Generator erfordert jedoch einen Frequenzumrichter, mit dem der erzeugte elektrische Strom hinsichtlich seiner Spannung, seiner Frequenz und seiner Phasenlage an die Netzbedingungen angepasst wird. Da der gesamte im Generator erzeugte elektrische Strom den Frequenzumrichter durchläuft, muss dieser entsprechend leistungsstark ausgelegt sein, was jedoch aufgrund der zunehmenden Leistung moderner Windkraftanlagen mit erheblichen Kosten und einem hohen Störungspotential verbunden ist.

Zur Vermeidung dieser Nachteile sind daher auch Windkraftanlagen vorgeschlagen worden, die einen drehzahlvariabel betreibbaren Windrotor, einen drehzahlkonstant betreibbaren Generator und eine Kraftstelleinrichtung aufweisen, die über ein Überlagerungsgetriebe miteinander in Triebverbindung stehen. Das Überlagerungsgetriebe ist vorzugsweise als ein einfaches Planetengetriebe ausgebildet, dessen Planetenradträger (Steg) unmittelbar oder über eine Hochtriebstufe mit der Nabe des Windrotors in Verbindung steht, dessen Sonnenrad mit dem Rotor des Generators oder der Kraftstelleinrichtung verbunden ist, und dessen Hohlrad mit der Kraftstelleinrichtung oder dem Rotor des Generators verbunden ist. Durch ein Festhalten, Vorwärtsdrehen (gleiche Drehrichtung wie Windrotor und Rotor des Generators), oder Rückwärtsdrehen (entgegengesetzte Drehrichtung wie Windrotor und Rotor des Generators) des Hohlrades bzw. des Sonnenrades mittels der Kraftstelleinrichtung wird die zwischen dem Planetenradträger und dem Sonnenrad bzw. dem Hohlrad wirksame Übersetzung des Planetengetriebes in Abhängigkeit der variablen Drehzahl des Windrotors derart geregelt, dass die Rotordrehzahl des Generators weitgehend konstant gehalten wird. Eine weitere Beeinflussung der Rotordrehzahl des Generators kann über eine Pitch- Regelung und/oder Stall-Regelung erfolgen.

In einem in einer Windkraftanlage einsetzbaren Antriebsstrang gemäß der DE 103 14 757 B3 ist die Kraftstelleinrichtung bevorzugt als ein hydrodynamischer Drehmomentwandler ausgebildet, der koaxial über der das Sonnenrad des Überlagerungsgetriebes mit dem Rotor des Generators verbindenden Ausgangswelle angeordnet ist. Das Pumpenrad des Drehmomentwandlers ist drehfest mit der Ausgangswelle verbunden, wogegen das Turbinenrad des Drehmomentwandlers über eine als einfaches Planetengetriebe mit festgehaltenem Planetenradträger (Standgetriebe mit Drehrichtungsumkehr) ausgebildete Untersetzungsstufe mit dem Hohlrad des Überlagerungsgetriebes in Triebverbindung steht. Zur Steuerung der Drehzahl und des aufgenommenen Drehmomentes des Pumpenrades sind die Leitschaufeln des Drehmomentwandlers verstellbar.

Wie in der zugeordneten DE 103 61 443 B4 näher erläutert ist, kann bei einem solchen Antriebsstrang mit einer geeigneten Auslegung des Überlagerungsgetriebes, des Drehmomentwandlers und der Untersetzungsstufe sowie mit einer geeigneten Einstellung der Umlenkschaufeln des Drehmomentwandlers eine passive, d.h. weitgehend selbsttätige Regelung erreicht werden, mittels der innerhalb eines vorgegebenen Windgeschwindigkeitsbereiches der Windrotor bei variabler Drehzahl in seinem jeweils optimalen Betriebspunkt betrieben und zugleich die Rotordrehzahl des Generators konstant gehalten wird. Nachteilig an dieser bekannten Windkraftanlage ist jedoch, dass ihr Gesamtwirkungsgrad trotz des wirkungsgradoptimalen Betriebs des Windrotors aufgrund des permanenten und mit schlechtem Wirkungsrad erfolgenden Energierückflusses über den Drehmomentwandler vergleichsweise niedrig ist.

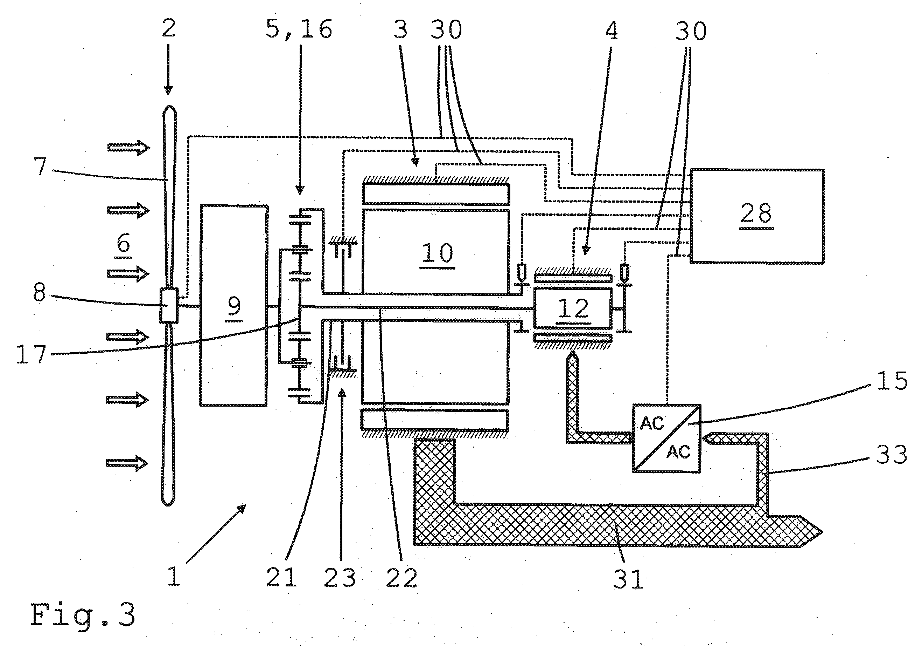

In der DE 37 14 858 A1 wird dagegen ein in einer Windkraftanlage einsetzbares Getriebe vorgeschlagen, bei dem die Kraftstelleinrichtung als ein gegenüber dem ersten Generator (Hauptgenerator) leistungsschwächerer zweiter Generator ausgebildet ist. In der Ausführungsvariante gemäß der dortigen Fig. 3 ist der Rotor des Hauptgenerators drehfest mit dem Hohlrad eines Überlagerungsgetriebes verbunden, wogegen der Rotor des zweiten Generators über eine Triebwelle drehfest mit dem Sonnenrad des Überlagerungsgetriebes in Verbindung steht. Der zweite Generator ist in koaxialer Anordnung von dem Windrotor aus gesehen axial hinter dem Hauptgenerator angeordnet, wobei die zugeordnete Triebwelle zentral durch den hohl ausgebildeten Rotor des Hauptgenerators geführt ist. Durch eine entsprechende Regelung der Rotordrehzahl und des aufgenommenen Drehmomentes des zweiten Generators in Abhängigkeit von der Rotordrehzahl des Windrotors kann die Rotordrehzahl des Hauptrotors bei hohen Windgeschwindigkeiten konstant gehalten werden. Dabei wird von dem zweiten Generator zusätzlich zu dem Hauptgenerator elektrischer Strom erzeugt, der jedoch aufgrund des drehzahlvariablen Betriebs dieses Generators zur Einspeisung in ein Stromnetz in einem zugeordneten Frequenzumrichter umgewandelt werden muss.

Aus der Beschreibung einer Windkraftanlage mit strukturell leicht abweichendem, aber funktionell identischem Aufbau in der EP 1 283 359 A1 ist bekannt, dass eine als Kraftstelleinrichtung vorgesehene Elektromaschine zur Konstanthaltung der Rotordrehzahl des Generators sowohl als Generator als auch als Motor betrieben werden kann. Im Generatorbetrieb der Elektromaschine, bei dem der Rotor der Elektromaschine und das Sonnenrad des Überlagerungsgetriebes in derselben Drehrichtung wie der Windrotor und der Rotor des Generators drehen, wird die zwischen dem Windrotor bzw. der Ausgangswelle des Hochtriebs und dem Rotor des Generators wirksame Übersetzung bei zunehmender Rotordrehzahl des Windrotors gegenüber dem Zustand bei festgehaltenem Sonnenrad erhöht, was einem Betrieb der Windkraftanlage bei hohen Windgeschwindigkeiten oberhalb der Nenndrehzahl des Windrotors entspricht. Im Motorbetrieb der Elektromaschine, bei dem der Rotor der Elektromaschine und das Sonnenrad des Überlagerungsgetriebes entgegen der Drehrichtung des Windrotors und des Rotors des Generators drehen, wird die zwischen dem Windrotor bzw. der Ausgangswelle des Hochtriebs und dem Rotor des Generators wirksame Übersetzung bei abnehmender Rotordrehzahl des Windrotors gegenüber dem Zustand bei festgehaltenem Sonnenrad reduziert, was einem Betrieb der Windkraftanlage bei mittleren Windgeschwindigkeiten unterhalb der Nenndrehzahl des Windrotors entspricht. Im Generatorbetrieb der Elektromaschine wird die zusätzlich erzeugte elektrische Energie über einen zugeordneten Frequenzumrichter in das Stromnetz eingespeist, im Motorbetrieb der Elektromaschine wird die dafür benötigte elektrische Energie über den Frequenzumrichter aus dem Stromnetz entnommen.

Ein weiteres Beispiel ist in der EP 1 895 157 gezeigt.

Zur weiteren Erhöhung der Energieausbeute von Windkraftanlagen ist jedoch generell auch eine Erweiterung ihres Betriebsbereiches bis zu niedrigen Windgeschwindigkeiten wünschenswert.

Vor diesem Hintergrund liegt der Erfindung die Aufgabe zugrunde, eine Windkraftanlage der eingangs genannten Bauart im Hinblick auf eine Erweiterung ihres Betriebsbereiches bis hin zu niedrigen Windgeschwindigkeiten weiterzubilden. Außerdem soll ein Verfahren zur Betriebssteuerung einer derartigen Windkraftanlage angegeben werden.

Die konstruktive Aufgabe zur Erweiterung des Betriebsbereiches der Windkraftanlage ist erfindungsgemäß in Verbindung mit den Merkmalen des Oberbegriffs des Anspruchs 1 dadurch gelöst, dass im Kraftfluss zwischen dem Überlagerungsgetriebe und dem Generator eine steuerbare Feststellbremse zur bedarfsweisen Arretierung des Generators angeordnet ist.

Vorteilhafte Ausgestaltungen und Weiterbildungen der erfindungsgemäßen Windkraftanlage sind Gegenstand den Unteransprüchen 2 bis 6.

Die Erfindung geht demnach von einer Windkraftanlage aus, die einen drehzahlvariabel betreibbaren Windrotor, einen drehzahlkonstant betreibbaren Generator, und eine drehzahlvariabel betreibbare Elektromaschine umfasst, die über ein Überlagerungsgetriebe miteinander in Triebverbindung stehen. Die Elektromaschine dient als Kraftstelleinrichtung zur Drehzahlregelung des Generators und ist hierzu sowohl als Generator als auch als Motor betreibbar. Zur Einspeisung der im Generatorbetrieb erzeugten elektrischen Leistung und zur Entnahme der im Motorbetrieb benötigten elektrischen Leistung steht die Elektromaschine über einen Frequenzumrichter mit einem Stromnetz in Verbindung. Der Betriebsbereich einer derart ausgebildeten Windkraftanlage ist auf hohe Windgeschwindigkeiten oberhalb der Nenndrehzahl des Windrotors und auf mittlere Windgeschwindigkeiten unterhalb der Nenndrehzahl des Windrotors beschränkt.

Zur Erweiterung des Betriebsbereiches der Windkraftanlage hin zu niedrigen Windgeschwindigkeiten ist erfindungsgemäß eine steuerbare, d.h. ein- und ausrückbare Feststellbremse vorgesehen, die im Kraftfluss zwischen dem Überlagerungsgetriebe und dem Generator angeordnet ist. Diese Feststellbremse wird bei niedrigen Windgeschwindigkeiten, bei denen der Windrotor zwar noch angetrieben wird, aber die Drehzahl des Hauptgenerators nicht mehr konstant gehalten werden kann, eingerückt. Hierdurch werden der Rotor des Hauptgenerators und das mit diesem verbundene Ausgangselement des Überlagerungsgetriebes gegenüber einem Gehäusebauteil der Gondel arretiert. In diesem Betriebszustand wird der Hauptgenerator abgeschaltet und die an sich als Kraftstelleinrichtung vorgesehene Elektromaschine als Generator betrieben. Der von der Elektromaschine erzeugte elektrische Strom wird dabei über den zugeordneten Frequenzumrichter in das Stromnetz eingespeist. Mit der relativ einfach und kostengünstig realisierbaren Erfindung ist es somit möglich, mit gattungsgemäßen Windkraftanlagen, die an sich für mittlere und hohe Windgeschwindigkeiten ausgelegt sind, auch bei niedrigen Windgeschwindigkeiten elektrische Energie zu erzeugen und damit deren Energieausbeute zu steigern.

Bei einer bevorzugten Ausbildung des Überlagerungsgetriebes als ein einfaches Planetengetriebe, dessen Planetenradträger mit dem Windrotor in Triebverbindung steht, dessen Hohlrad über eine zugeordnete Triebwelle mit dem Rotor des Generators verbunden ist, und dessen Sonnenrad mit dem Rotor der Elektromaschine verbunden ist, ist die Feststellbremse an der Triebwelle des Generators angeordnet.

Die Feststellbremse kann dabei reibschlüssig wirksam ausgebildet sein.

Die reibschlüssig wirksame Feststellbremse ist bevorzugt als eine Scheibenbremse mit mindestens einer drehfest auf der Triebwelle angeordneten Bremsscheibe und mit mindestens einem gehäusefesten Bremssattel ausgebildet. Derartige Bremsen sind aus dem Fahrzeugbau hinreichend bekannt und können gegebenenfalls von dort weitgehend unverändert übernommen werden.

Da die Elektromaschine jedoch auch zur Synchronisierung der Drehzahlen nutzbar ist, kann die Feststellbremse auch formschlüssig wirksam ausgebildet sein, was mit einem verschleißfreien Betrieb und verringertem Wartungsaufwand verbunden ist.

Die formschlüssig wirksame Feststellbremse ist bevorzugt als eine Klauenbremse mit einem drehfest auf der Triebwelle angeordneten Klauenrad und einem gehäuseseitig drehfest gelagerten Klauenrad ausgebildet, von denen eines der Klauenräder mittels einer zugeordneten Stellvorrichtung in Richtung des anderen Klauenrads axial verschiebbar ist. Die Klauenverzahnungen der Klauenräder können wahlweise axial oder radial ausgerichtet sein.

Die verfahrenstechnische Aufgabe zur Betriebssteuerung der Windkraftanlage ist erfindungsgemäß in Verbindung mit den Merkmalen des Oberbegriffs des Anspruchs 7 dadurch gelöst, dass bei niedrigen Windgeschwindigkeiten eine im Kraftfluss zwischen dem Überlagerungsgetriebe und dem Generator angeordnete steuerbare Feststellbremse eingerückt, der Generator abgeschaltet, und elektrischer Strom durch einen Generatorbetrieb der Elektromaschine erzeugt sowie über den Frequenzumrichter in das Stromnetz eingespeist wird.

Vorteilhafte Ausgestaltungen und Weiterbildungen des erfindungsgemäßen Verfahrens sind in den Ansprüchen 8 bis 10 angegeben.

Wie schon zuvor erläutert wurde, geht das erfindungsgemäße Verfahren von einer Windkraftanlage aus, die einen drehzahlvariabel betreibbaren Windrotor, einen drehzahlkonstant betreibbaren Generator, und eine drehzahlvariabel betreibbare Elektromaschine umfasst, die über ein Überlagerungsgetriebe miteinander in Triebverbindung stehen. Die Elektromaschine ist als Kraftstelleinrichtung zur Drehzahlregelung des Generators vorgesehen und hierzu sowohl als Generator als auch als Motor betreibbar. Zur Einspeisung und Entnahme von elektrischer Energie steht die Elektromaschine über einen Frequenzumrichter mit einem Stromnetz in Verbindung.

Durch das Einrücken der Feststellbremse werden der Rotor des Generators und das mit diesem verbundene Ausgangselement des Überlagerungsgetriebes gegenüber einem Gehäusebauteil der Gondel arretiert. In etwa zeitgleich wird der Generator abgeschaltet und die Elektromaschine in den Generatorbetrieb gesteuert. Somit wird mit der Windkraftanlage auch bei niedrigen Windgeschwindigkeiten elektrische Energie erzeugt, die sonst ungenutzt bliebe.

Zeitweilig können jedoch auch derartig niedrige Windgeschwindigkeiten vorherrschen, die zwar für einen Antrieb des Windrotors und einen Generatorbetrieb der Elektromaschine bei Erzeugung einer geringen elektrischen Leistung ausreichen, jedoch aufgrund eines relativ hohen Losbrechmomentes des Windrotors, das auf erhöhte Widerstandsmomente in Lagern und Verzahnungen der Getriebe beim Übergang von Haftreibung in Roll- und Gleitreibung zurück zu führen ist, für das Andrehen des stehenden Windrotors nicht ausreichen.

Es wird daher gemäß einer Weiterbildung der Erfindung vorgeschlagen, dass der Windrotor bei entsprechenden Windverhältnissen, also bei einer Windgeschwindigkeit, die unterhalb einer Anlaufgeschwindigkeit und oberhalb einer minimalen Betriebsgeschwindigkeit liegt, durch einen Motorbetrieb der Elektrorraschine zumindest bis zum Erreichen einer Mindestdrehzahl beschleunigt wird, und dass die Elektromaschine zur Erzeugung von elektrischer Energie anschließend in den Generatorbetrieb umgeschaltet wird. Auf diese Art und Weise können auch extrem niedrige Windgeschwindigkeiten zur Energieerzeugung genutzt werden, bei denen Windkraftanlagen gleicher Baugröße bislang abgeschaltet waren.

Bei einer formschlüssigen Ausbildung der Feststellbremse, beispielsweise einer Ausführung als Klauenbremse, wird diese vor dem Einrücken zweckmäßig mittels eines Generator- und/oder eines Motorbetriebs der Elektromaschine synchronisiert.

Dabei wird eine Zahn-auf-Zahn-Stellung an der Feststellbremse vorteilhaft dadurch verhindert, dass bei drehendem Windrotor die Synchronisierung der Feststellbremse nur bis zum Erreichen einer vorgegebenen Mindestdrehzahldifferenz durchgeführt wird, und bei stillstehendem Windrotor eine Mindestdrehzahldifferenz an der Feststellbremse erzeugt wird.

Zur Verdeutlichung der Erfindung ist der Beschreibung eine Zeichnung mit einem Ausführungsbeispiel beigefügt. In dieser zeigt
- Fig. 1: den schematischen Aufbau einer bevorzugten Ausführungsform der erfindungsgemäßen Windkraftanlage,
- Fig. 2: den Energiefluss in einer ersten Betriebsart der Windkraftanlage gemäß Fig. 1,
- Fig. 3: den Energiefluss in einer zweiten Betriebsart der Windkraftanlage gemäß Fig. 1,
- Fig. 4: den Energiefluss in einer dritten Betriebsart der Windkraftanlage gemäß Fig. 1, und
- Fig. 5: den Energiefluss in einer vierten Betriebsart der Windkraftanlage gemäß Fig. 1.

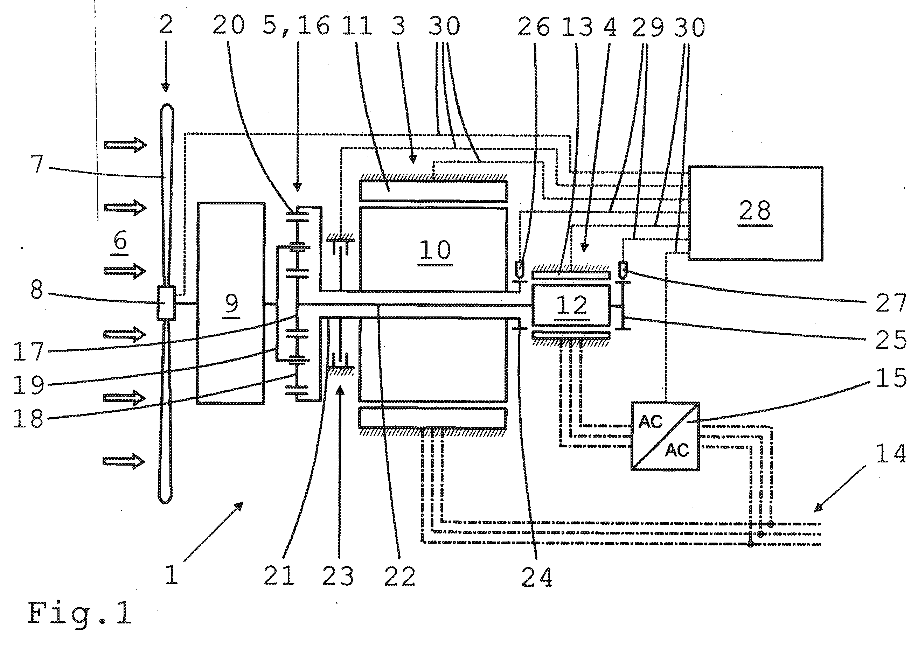

Eine erfindungsgemäße Windkraftanlage 1, die in Fig. 1 abgebildet ist, umfasst einen drehzahlvariabel betreibbaren Windrotor 2, einen drehzahlkonstant betreibbaren Generator 3 und eine drehzahlvariabel betreibbare Elektromaschine 4, die über ein Überlagerungsgetriebe 5 miteinander in Triebverbindung stehen sowie koaxial bezüglich einer gemeinsamen geometrischen Drehachse in einer vorliegend nicht abgebildeten Gondel angeordnet sind. Der vom Wind 6 antreibbare Windrotor 2 weist vorzugsweise drei aerodynamisch geformte Rotorblätter 7 auf, die umfangsseitig gleichverteilt um ihre Längsachse begrenzt drehbar in einer Rotornabe 8 befestigt sind. Die Rotornabe 8 ist drehfest mit der Eingangswelle eines Hauptgetriebes 9 verbunden, das als Hochtrieb ausgebildet ist und beispielsweise als eine einfache Stirnzahnradstufe oder als ein einfaches Planetengetriebe mit gehäuseseitig arretiertem Hohlrad ausgeführt sein kann.

Der mit konstanter Rotordrehzahl betreibbare Generator 3 ist als ein Innenläufer mit einem radial innenliegenden und mit einer Zentralbohrung versehenen Rotor 10 sowie mit einem radial außenliegenden gehäusefesten Stator 11 ausgebildet. Die mit variabler Rotordrehzahl betreibbare Elektromaschine 4 ist ebenfalls als ein Innenläufer mit einem radial innenliegenden Rotor 12 sowie einem radial außenliegenden gehäusefesten Stator 13 ausgebildet, und gegenüber dem Generator 3 deutlich leistungsschwächer ausgeführt. Aufgrund seiner drehzahlkonstanten Betriebsweise steht der Generator 3 elektrotechnisch unmittelbar mit einem elektrischen Stromnetz 14 in Verbindung, wogegen die Elektromaschine 4 aufgrund ihrer drehzahlvariablen Betriebsweise über einen Frequenzumrichter 15 mit dem Stromnetz 14 verbunden ist.

Das Überlagerungsgetriebe 5 ist als ein einfaches Planetengetriebe 16 mit einem Sonnenrad 17, einem mehrere Planetenräder 18 tragenden Planetenradträger 19, und einem Hohlrad 20 ausgebildet. Der Planetenradträger 19 ist drehfest mit der Ausgangswelle des Hauptgetriebes 9 verbunden. Das Höhlrad 20 steht über eine als Hohlwelle ausgebildete Triebwelle 21 drehfest mit dem Rotor 10 des Generators 3 in Verbindung. Das Sonnenrad 17 ist über eine zentrale Triebwelle 22, die durch die Hohlwelle 21 und den Rotor 10 des Generators 3 geführt ist, drehfest mit dem Rotor 12 der Elektromaschine 4 verbunden.

An der Triebwelle 21 zwischen dem Hohlrad 20 des Überlagerungsgetriebes 5 und dem Rotor 10 des Generators 3 ist eine steuerbare, d.h. ein- und ausrückbare Feststellbremse 23 angeordnet, mit welcher der Rotor 10 des Generators 3 bedarfsweise gegenüber einem gehäusefesten Bauteil arretierbar ist. Zur Erfassung der Rotordrehzahlen des Generators 3 und der Elektromaschine 4 weisen die betreffenden Rotoren 11, 13 jeweils ein Geberrad 24, 25 auf, an dem jeweils ein Drehzahlsensor 26, 27 angeordnet ist.

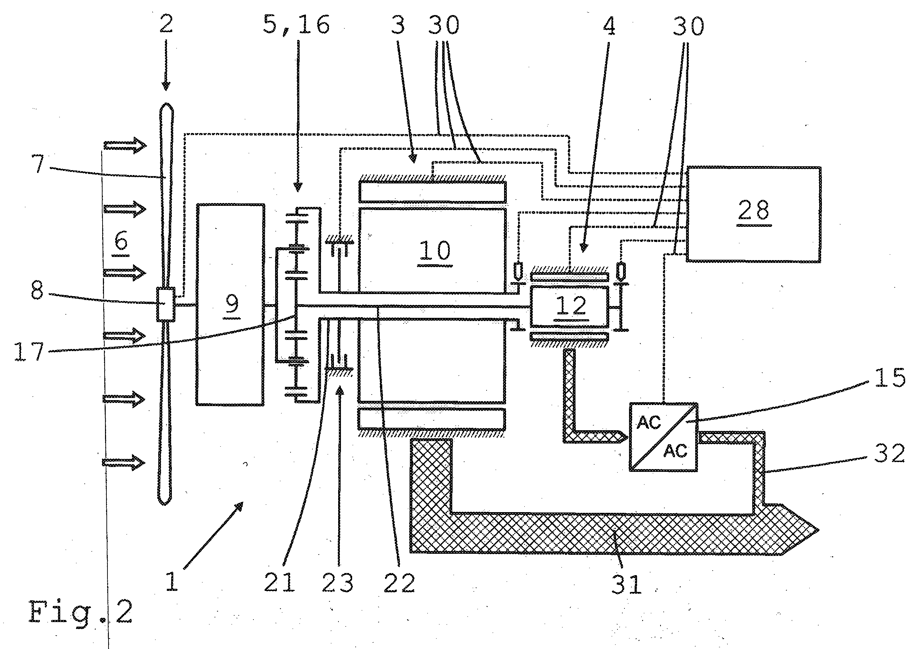

Zur Steuerung der Windkraftanlage 1 ist ein elektronisches Steuergerät 28 vorgesehen, das über Sensorleitungen 29 mit den Drehzahlsensoren 26, 27 und über Steuerleitungen 30 mit der Rotornabe 8 des Windrotors 2, der Feststellbremse 23, den Erregerwicklungen des Generators 3 sowie der Elektromaschine 4, und mit dem Frequenzumrichter 15 in Verbindung steht. Nachfolgend wird der Betrieb der Windkraftanlage 1 anhand der aus der Fig. 1 abgeleiteten Figuren 2 bis 5 näher erläutert.

In einer ersten Betriebsart der Windkraftanlage 1 gemäß Fig. 2, die bei hohen Windgeschwindigkeiten zur Anwendung kommt, bei denen der Windrotor 2 mit einer oberhalb der Nenndrehzahl liegenden Rotordrehzahl angetrieben wird, ist die Elektromaschine 4 in den Generatorbetrieb geschaltet. Dabei wird das Schleppmoment sowie die Rotordrehzahl der Elektromaschine 4 und damit die zwischen der Ausgangswelle des Hauptgetriebes 9 und der Triebwelle 21 des Generators 3 wirksame Übersetzung bei variabler Drehzahl des Windrotors 2 derart geregelt, dass der Generator 3 weitgehend konstant auf seiner vorgesehenen Betriebsdrehzahl gehalten wird, die bei einer Ausführung als Synchronmaschine mit zwei Polpaaren und einer Netzfrequenz von 50 Hz bei 1500 U/min liegt.

In dieser Betriebsart, die aus der DE 37 14 858 A1 und der EP 1 283 359 A1 bekannt ist, dreht der Rotor 12 der Elektromaschine 4 und das Sonnenrad 17 des Überlagerungsgetriebes 5 in derselben Drehrichtung wie der Windrotor 2 und der Rotor 10 des Generators 3. Die Feststellbremse 23 ist in dieser Betriebsart geöffnet bzw. ausgerückt. Zu dem von dem Generator 3 erzeugten und in das elektrische Stromnetz 14 eingespeisten elektrischen Energie 31 kommt die über den Frequenzumrichter 15 an die Netzbedingungen angepasste Energie 32 der Elektromaschine 4 hinzu, welche in der Größenordnung von 5 % bis 20 % der erzeugten Energie 31 des Generators 3 liegt.

In einer zweiten Betriebsart der Windkraftanlage 1 gemäß Fig. 3, die bei mittleren Windgeschwindigkeiten zur Anwendung kommt, bei denen der Windrotor 2 mit einer unterhalb der Nenndrehzahl liegenden Rotordrehzahl angetrieben wird, ist die Elektromaschine 4 in den Motorbetrieb geschaltet. Dabei wird das Antriebsmoment sowie die Rotordrehzahl der Elektromaschine 4 und damit die zwischen der Ausgangswelle des Hauptgetriebes 9 sowie der Triebwelle 21 des Generators 3 wirksame Übersetzung bei variabler Rotordrehzahl des Windrotors 2 derart geregelt, dass der Generator 3 konstant auf seiner vorgesehenen Rotordrehzahl gehalten wird. In dieser Betriebsart, die zumindest aus der EP 1 283 359 A1 bekannt ist, dreht der Rotor 12 der Elektromaschine 4 und das Sonnenrad 17 des Überlagerungsgetriebes 5 entgegen der Drehrichtung des Windrotors 2 und des Rotors 10 des Generators 3. Die Feststellbremse 23 ist in dieser Betriebsart ebenfalls geöffnet bzw. ausgerückt. Die von dem Generator 3 erzeugte Energie 31 wird in der Größenordnung von 5% - 20 % um die von der Elektromaschine 4 über den Frequenzumrichter 15 entnommene Energie 33 reduziert, so dass insgesamt eine entsprechend reduzierte Energiemenge in das Stromnetz 14 eingespeist wird. Diese entnommene Energie 33 wird dem Generator 3 über die Elektromaschine 4 wieder zugeführt und stellt damit einen innerhalb der Windkraftanlage zirkulierenden Energiestrom dar.

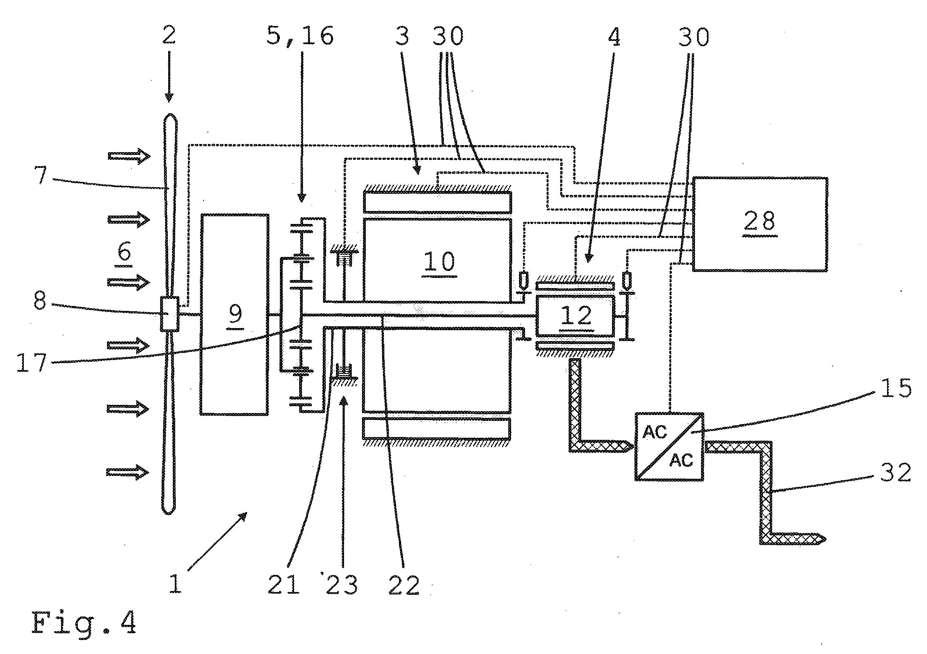

In einer dritten Betriebsart der Windkraftanlage 1 gemäß Fig. 4, die bei derart niedrigen Windgeschwindigkeiten zur Anwendung kommt, bei welcher der Windrotor 2 mit einer weit unterhalb der Nenndrehzahl liegenden Rotordrehzahl angetrieben wird, die Rotordrehzahl des Generators 3 jedoch nicht mehr konstant gehalten werden kann. In dieser Betriebsart wird die Feststellbremse 23 geschlossen bzw. eingerückt und damit der Rotor 10 des Generators 3 und das Hohlrad 20 des Überlagerungsgetriebes 5 gegenüber einem gehäusefesten Bauteil der Gondel arretiert. Der Generator 3 wird abgeschaltet, und das Überlagerungsgetriebe 5 ist als Standgetriebe mit einer Übersetzung zwischen 0,2 und 0,4 wirksam. Die Elektromaschine 4 wird hierbei als drehzahlvariabler Generator betrieben und erzeugt elektrische Energie 32, die über den Frequenzumrichter 15 in das Stromnetz 14 eingespeist wird.

Die Feststellbremse 23 kann, beispielsweise in Form einer Klauenbremse, formschlüssig wirksam ausgebildet sein, wobei das Einrücken der Feststellbremse 23 zweckmäßig mittels eines Generator- und/oder Motorbetriebs der Elektromaschine 4 synchronisiert wird. Mit der durch die Feststellbremse 23 ermöglichten dritten Betriebsart ist der Betriebsbereich der erfindungsgemäßen Windkraftanlage 1 gegenüber bekannten Windkraftanlagen bis hin zu niedrigen Windgeschwindigkeiten erweitert, wodurch die Energieausbeute der Windkraftanlage, insbesondere bei Windverhältnissen mit längeren Schwachwindphasen, erheblich gesteigert werden kann.

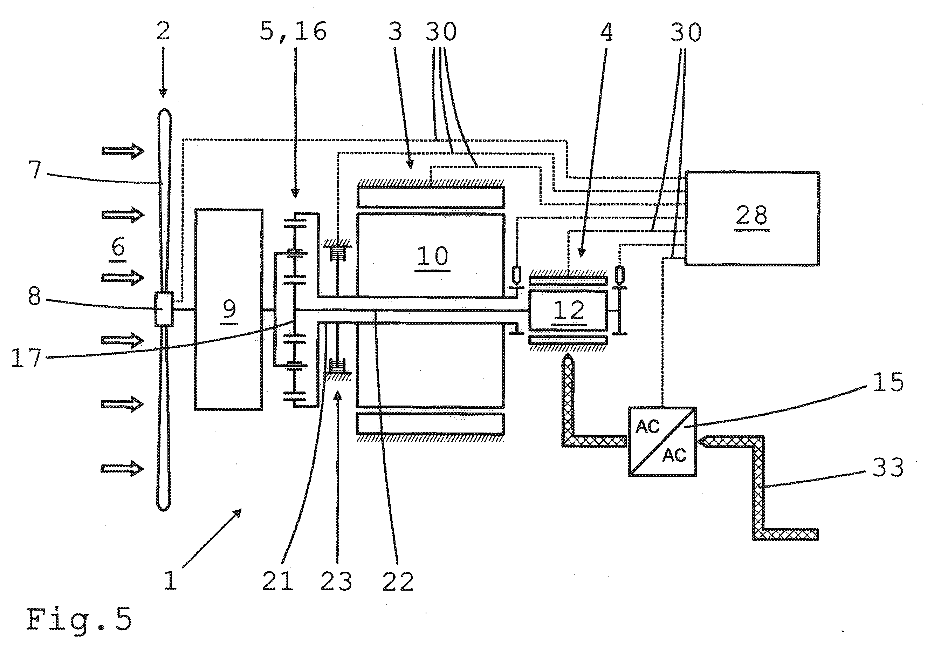

In einer vierten Betriebsart der Windkraftanlage 1 gemäß Fig. 5, die bei extrem niedrigen Windgeschwindigkeiten zur Anwendung kommt, die für den Antrieb des Windrotors 2 und einen Generatorbetrieb der Elektromaschine 4 zwar ausreichen, jedoch für ein Andrehen des stehenden Windrotors 2 nicht ausreichen, wird der Windrotor 2 bei geschlossener bzw. eingerückter Feststellbremse 23 von der in dieser Phase in den Motorbetrieb geschalteten Elektromaschine 4 zumindest bis zum Erreichen einer Mindestdrehzahl, bei welcher der weitere Antrieb durch den Wind 6 gewährleistet ist, beschleunigt. Die hierzu benötigte elektrische Energie 33 wird dem Stromnetz 14 über den Frequenzumrichter 15 entnommen. Anschließend wird die Elektromaschine 4 wieder in den Generatorbetrieb geschaltet und liefert entsprechend der dritten Betriebsart gemäß Fig. 4 elektrische Energie, die über den Frequenzumrichter 15 in das Stromnetz 14 eingespeist wird. Durch das Andrehen des Windrotors 2 mittels der Elektromaschine 4 und das anschließende Umschalten der Elektromaschine 4 in den Generatorbetrieb wird der Betriebsbereich der erfindungsgemäßen Windkraftanlage 1 bis hin zu extrem niedrigen Windgeschwindigkeiten erweitert.

Die erfindungsgemäße Windkraftanlage kann auch zur Stabilisierung des Stromnetzes genutzt werden, indem sie als sogenannter Phasenschieber auf das Stromnetz 14 wirkt. Der Generator 3 wird dazu mit Hilfe des Steuergerätes 28 so betrieben, dass er Blindleistung aus dem Stromnetz 14 aufnehmen und Blindleistung in das Stromnetz 14 abgeben kann.

### Bezugszeichen

- 1: Windkraftanlage
- 2: Windrotor
- 3: Generator, Hauptgenerator
- 4: Elektromaschine
- 5: Überlagerungsgetriebe
- 6: Wind
- 7: Rotorblatt
- 8: Rotornabe
- 9: Hauptgetriebe, Hochtrieb
- 10: Rotor des Generators
- 11: Stator des Generators
- 12: Rotor der Elektromaschine
- 13: Stator der Elektromaschine
- 14: Stromnetz
- 15: Frequenzumrichter
- 16: Planetengetriebe
- 17: Sonnenrad
- 18: Planetenrad
- 19: Planetenradträger
- 20: Hohlrad
- 21: Triebwelle, Hohlwelle
- 22: Zentrale Triebwelle
- 23: Feststellbremse
- 24: Geberrad des Generators
- 25: Geberrad der Elektromaschine
- 26: Drehzahlsensor des Generators
- 27: Drehzahlsensor der Elektromaschine
- 28: Steuergerät
- 29: Sensorleitung
- 30: Steuerleitung
- 31: Eingespeiste Energie des Generators
- 32: Eingespeiste Energie der Elektromaschine
- 33: Entnommene Energie der Elektromaschine

## Patentansprüche

1. Windkraftanlage, mit einem drehzahlvariabel betreibbaren Windrotor (2), einem drehzahlkonstant betreibbaren Generator (3), und einer drehzahlvariabel betreibbaren Elektromaschine (4), die über ein Überlagerungsgetriebe (5) miteinander in Triebverbindung stehen, wobei die Elektromaschine (4) als Kraftstelleinrichtung zur Drehzahlregelung des Generators (3) sowohl als Generator als auch als Motor betreibbar ist und über einen Frequenzumrichter (15) mit einem Stromnetz (14) in Verbindung steht, wobei im Kraftfluss zwischen dem Überlagerungsgetriebe (5) und dem Generator (3) eine steuerbare Feststellbremse (23) zur bedarfsweisen Arretierung des Generators (3) angeordnet ist, **dadurch gekennzeichnet, dass** die Feststellbremse (23) formschtüssig wirksam ausgebildet ist.

2. Windkraftanlage nach Anspruch 1, **dadurch gekennzeichnet, dass** die Feststellbremse (23) als eine Klauenbremse mit einem drehfest auf der Triebwelle (21) angeordneten Klauenrad und einem gehäuseseitig drehfest gelagerten Klauenrad ausgebildet ist, von denen eines der Klauenräder mittels einer zugeordneten Stellvorrichtung in Richtung des anderen Klauenrads axial verschiebbar ist.

3. Verfahren zur Betriebssteuerung einer Windkraftanlage, die einen drehzahlvariabel betreibbaren Windrotor (2), einen drehzahlkonstant betreibbaren Generator (3), und eine drehzahlvariabel betreibbare Elektromaschine (4) umfasst, die über ein Überlagerungsgetriebe (5) miteinander in Triebverbindung stehen, wobei die Elektromaschine (4) als Kraftstelleinrichtung zur Drehzahlregelung des Generators (3) sowohl als Generator als auch als Motor betreibbar ist und über einen Frequenzumrichter (15) mit einem Stromnetz (14) in Verbindung steht, **dadurch gekennzeichnet, dass** bei niedrigen Windgeschwindigkeiten eine im Kraftfluss zwischen dem Überlagerungsgetriebe (5) und dem Generator (3) angeordnete steuerbare Feststellbremse (23) eingerückt, der Generator (3) abgeschaltet und elektrischer Strom durch einen Generatorbetrieb der Elektromaschine (4) erzeugt wird, welcher über den Frequenzumrichter (15) in das Stromnetz (14) eingespeist wird.

4. Verfahren nach Anspruch 3, **dadurch gekennzeichnet, dass** der Windrotor (2) bei einer Windgeschwindigkeit, die unterhalb einer Anlaufgeschwindigkeit und oberhalb einer minimalen Betriebsgeschwindigkeit liegt, durch einen Motorbetrieb der Elektromaschine (4) zumindest bis zum Erreichen einer Mindestdrehzahl beschleunigt wird, und dass die Elektromaschine (4) anschließend in den Generatorbetrieb umgeschaltet wird.

5. Verfahren nach Anspruch 3 oder 4, **dadurch gekennzeichnet, dass** die Feststellbremse (23) bei einer formschlüssigen Ausbildung vor dem Einrücken mittels eines Generator- und/oder Motorbetriebs der Elektromaschine (4) synchronisiert wird.

6. Verfahren nach Anspruch 5, dadurch gekenntzeichnet, dass zur Vermeidung einer Zahn-auf-Zahn-Stellung an der Feststellbremse (23) bei drehendem Windrotor (2) die Synchronisierung der Feststellbremse (23) nur bis zum Erreichen einer vorgegebenen Mindestdrehzahldifferenz durchgeführt wird, und bei stillstehendem Windrotor (2) eine Mindestdrehzahldifferenz an der Feststellbremse (23) erzeugt wird.

## Claims

1. Wind power plant, comprising a wind rotor (2) which can be operated at a variable rotation speed, a generator (3) which can be operated at a constant rotation speed, and an electrical machine (4) which can be operated at a variable rotation speed, which wind rotor, generator and electrical machine are drive-connected to one another by means of a variable-ratio gear mechanism (5), wherein the electrical machine (4) as a force-adjusting device for regulating the rotation speed of the generator (3) can be operated both as a generator and as a motor and is connected to a power supply system (14) by means of a frequency converter (15), wherein a controllable locking brake (23) for locking the generator (3) as required is arranged in the force flow between the variable-ratio gear mechanism (5) and the generator (3), **characterized in that** the locking brake (23) is designed such that it is active in an interlocking manner.

2. Wind power plant according to Claim 1, **characterized in that** the locking brake (23) is designed as a claw-type brake with a claw wheel which is arranged in a rotationally fixed manner on the drive shaft (21) and with a claw wheel which is mounted in a rotationally fixed manner on the housing, one of which claw wheels can be axially displaced in the direction of the other claw wheel by means of an associated adjustment apparatus.

3. Method for controlling operation of a wind power plant which comprises a wind rotor (2) which can be operated at a variable rotation speed, a generator (3) which can be operated at a constant rotation speed, and an electrical machine (4) which can be operated at a variable rotation speed, which wind rotor, generator and electrical machine are drive-connected to one another by means of a variable-ratio gear mechanism (5), wherein the electrical machine (4) as a force-adjusting device for regulating the rotation speed of the generator (3) can be operated both as a generator and as a motor and is connected to a power supply system (14) by means of a frequency converter (15), **characterized in that**, at low wind speeds, a controllable locking brake (23) which is arranged in the force flow between the variable-ratio gear mechanism (5) and the generator (3) is engaged, the generator (3) is switched off and electric current is generated by generator operation of the electrical machine (4), the said electric current being fed to the power supply system (14) by means of the frequency converter (15).

4. Method according to Claim 3, **characterized in that** the wind rotor (2), at a wind speed which is below a start-up speed and above a minimum operating speed, is accelerated by motor operation of the electrical machine (4) at least until a minimum rotation speed is reached, and **in that** the electrical machine (4) is then switched over to generator mode.

5. Method according to Claim 3 or 4, **characterized in that** the locking brake (23), given an interlocking design, is synchronized before engagement by means of generator and/or motor operation of the electrical machine (4).

6. Method according to Claim 5, **characterized in that**, in order to avoid a tooth-on-tooth position at the locking brake (23), the synchronization of the locking brake (23) is carried out only until a prespecified minimum rotation speed difference is achieved when the wind rotor (2) is rotating and a minimum rotation speed difference is generated at the locking brake (23) when the wind rotor (2) is stationary.

## Revendications

1. Eolienne comprenant un rotor éolien (2) pouvant être mis en fonctionnement à une vitesse de rotation variable, une génératrice (3) pouvant être mise en fonctionnement à une vitesse de rotation constante, et une machine électrique (4) pouvant être mise en fonctionnement à une vitesse de rotation variable, qui sont en liaison d'entraînement les uns avec les autres par l'intermédiaire d'un engrenage de superposition (5), dans lequel la machine électrique (4) peut être mise en fonctionnement aussi bien en génératrice qu'en moteur en tant que dispositif de réglage de force servant à réguler la vitesse de rotation de la génératrice (3) et est en liaison avec un réseau électrique (14) par l'intermédiaire d'un convertisseur de fréquence (15), dans lequel un frein d'immobilisation commandable (23) est disposé dans le flux de force entre l'engrenage de superposition (5) et la génératrice (3) pour permettre l'arrêt de la génératrice (3) en cas de besoin, **caractérisé en ce que** le frein d'immobilisation (23) est réalisé de manière à agir par complémentarité de forme.

2. Eolienne selon la revendication 1, **caractérisée en ce que** le frein d'immobilisation (23) est réalisé sous la forme d'un frein à mâchoire comportant une roue à mâchoire solidaire en rotation disposée sur l'arbre d'entraînement (21) et une roue à mâchoire montée solidaire en rotation du côté du boîtier, parmi lesquels l'une des roues à mâchoire peut être déplacée axialement au moyen d'un dispositif de réglage associé dans la direction de l'autre roue à mâchoire.

3. Procédé destiné à commander le fonctionnement d'une éolienne qui comprend un rotor éolien (2) pouvant être mis en rotation à une vitesse de rotation variable, une génératrice (3) pouvant être mise en fonctionnement à une vitesse de rotation constante, et une machine électrique (4) pouvant être mise en fonctionnement à une vitesse de rotation variable, qui sont en liaison d'entraînement les uns avec les autres par l'intermédiaire d'un engrenage de superposition (5), dans lequel la machine électrique (4) peut être mise en fonctionnement aussi bien en génératrice qu'en moteur en tant que dispositif de réglage de force servant à réguler la vitesse de rotation de la génératrice (3) et est en liaison avec un réseau électrique (14) par l'intermédiaire d'un convertisseur de fréquence (15), **caractérisé en ce qu'**en cas de vitesses de vents faibles, un frein d'immobilisation commandable (23) disposé dans le flux de force entre l'engrenage de superposition (5) et la génératrice (3) est actionné, la génératrice (3) est désactivée et un courant électrique est généré par un fonctionnement en mode générateur de la génératrice de la machine électrique (4), celui-ci étant injecté dans le réseau électrique (14) par l'intermédiaire du convertisseur de fréquence (15).

4. Procédé selon la revendication 3, **caractérisé en ce que** le rotor éolien (2), pour une vitesse de vent se situant en dessous d'une vitesse de démarrage et au-dessus d'une vitesse de fonctionnement minimale, est accéléré par un fonctionnement en mode moteur de la machine électrique (4) au moins jusqu'à ce qu'une vitesse de rotation minimale soit atteinte, et **en ce que** la machine électrique (4) est ensuite amenée à passer en mode générateur.

5. Procédé selon la revendication 3 ou 4, **caractérisé en ce que** le frein d'immobilisation (23), dans le cas d'une réalisation à complémentarité de forme, est synchronisé avant son actionnement au moyen d'un fonctionnement en mode générateur et/ou moteur de la machine électrique (4).

6. Procédé selon la revendication 5, **caractérisé en ce que**, pour éviter un positionnement dent contre dent sur le frein d'immobilisation (23), lorsque le rotor éolien (2) est en rotation, la synchronisation du frein d'immobilisation (23) n'est effectuée que jusqu'à ce qu'une différence de vitesse de rotation minimale prédéterminée soit atteinte et lorsque le rotor éolien (2) est au repos, une différence de vitesse de rotation minimale est générée sur le frein d'immobilisation (23).
